(19) Europäisches Patentamt
European Patent Office
Office européen des brevets

(11) **EP 4 053 951 A1**

(12) **EUROPEAN PATENT APPLICATION**

(43) Date of publication:
**07.09.2022 Bulletin 2022/36**

(51) International Patent Classification (IPC):
**H01M 8/18** (2006.01)     **H01M 8/20** (2006.01)

(21) Application number: **22158464.2**

(52) Cooperative Patent Classification (CPC):
**H01M 8/188; H01M 8/20**

(22) Date of filing: **24.02.2022**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.02.2021 DK PA202100200**

(71) Applicant: **Aarhus Universitet**
**8000 Aarhus C (DK)**

(72) Inventors:
• **Holm Kirk, Emil**
**8210 Aarhus V (DK)**
• **Bentien, Anders**
**8000 Aarhus C (DK)**

(74) Representative: **Andreasen, Søren Laursen Vasegaard**
**Tropa ApS**
**Aagade 97, 1st Floor**
**8370 Hadsten (DK)**

(54) **SYSTEM AND METHOD FOR BALANCING A VANADIUM REDOX FLOW BATTERY**

(57)    A method for chemical reduction of an oxidised vanadium redox flow battery (2) during operation by adding an organic reductant (8), wherein the vanadium redox flow battery (2) comprises a cathode tank (4) with a cathode electrolyte and an anode tank (6) with an anode electrolyte, wherein the same redox active vanadium solution (10) is present in the cathode tank (4) and the anode tank (6) of the vanadium redox flow battery (2). The method comprises the following steps:
- monitoring the state of charge (SoC) of the electrolyte (10) in the vanadium redox flow battery (2) during either:
a) a first configuration, in which the vanadium redox flow battery (2) is charged and performing a discharge of the vanadium redox flow battery (2) or
b) a first configuration, in which the vanadium redox flow battery (2) is discharged and performing a charge of the vanadium redox flow battery (2);

- monitoring a discharge profile (12) and/or charge profile (12) of the vanadium redox flow battery (2);
- determining the faradaic imbalance of the electrolyte (10) and calculating a first quantity $(Q_1)$ of the organic reductant (8) to be added to the electrolyte (10) to balance the vanadium redox flow battery (2) during operation and
- adding a second quantity $(Q_2)$ of the organic reductant (8) to the electrolyte (10).

Fig. 1C

**Description**

**Field of invention**

The present invention relates to a system and a method for balancing an oxidised vanadium redox flow battery.

**Prior art**

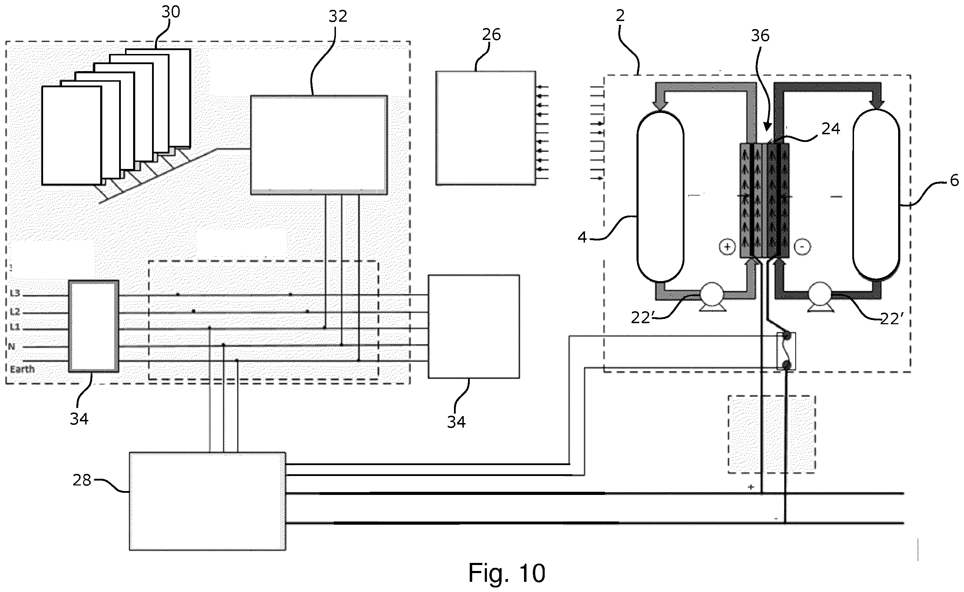

The vanadium flow batteries (VFBs) belong to the most matured flow battery technologies and the basic chemical principles are schematically shown in Fig. 10. Electricity is stored electrochemically by changing the oxidation states of vanadium electrolytes ($V^{3+}/V^{2+}$ and $VO^{2+}/VO_2^+$) that are dissolved in sulphuric acid and stored in two separate tanks. During charging or discharging the two solutions are circulated into a stack, in which the electrochemical energy is converted into electricity or vice versa. The stack typically consists of two carbon felt electrodes separated by a cation conductive membrane. During charging or discharging a redox reaction takes place across the membrane with the exchange of a proton. Electrons pass in an external circuit and generate electrical work in an external load ($R_L$). A stack typically comprises about 40 cells (or more) that are stacked in order to reach nominal stack voltage of 48 V (or higher).

Initially, the same vanadium solution, with average vanadium oxidation state ($V_{state}$) of +3.5 (50/50 of $V^{3+}$ and $V^{4+}$) is used for both the positive and negative side of the VFB. The theoretical capacity of vanadium is given by the following equation:

$$CAP_{Theo} = C_{tot} \cdot V \cdot F,$$

where $C_{tot}$ is the total molar concentration of vanadium, V is the volume of each of the containers and F is Faradays constant (96485 C/mol).

Because the same vanadium solution is used on both sides of the membrane, vanadium cross-over in the membrane inside the stack has no damaging effect on the battery. VFBs are therefore considered to have almost infinite lifetime.

Nonetheless, in real VFBs there are several reversible mechanisms that can degrade the chemical integrity and lead to battery capacity loss over time. One of these is related to slow oxidation where oxygen ($O_2$) from the air diffuses through the vanadium tanks and oxidises the vanadium solution:

$$(2) \qquad O_2(g) + 4H^+(aq) + 4V^{2+}(aq) \leftrightarrow 4V^{3+}(ag) + 2H_2O(l)$$

The $V^{2+}$ ions in the electrolyte solution react with oxygen. Because oxygen is a strong oxidizing agent and $V^{2+}$ is a powerful reducing agent, $V^{2+}$ ions can readily be oxidized by oxygen, as shown in equation (2). Hereby, the overall $V_{state}$ of the vanadium solutions on both sides of the membrane increases from the average +3.5. It is widely known that the electrolyte imbalance in the vanadium redox flow battery is an important concern regarding the long-term operation, as it leads to loss of capacity and efficiency as well as increased corrosion of the electrode materials.

In the following the specified voltages are related to single cell voltages. Accordingly, the values can be multiplied by the number of cells in the stack in order to calculate the total stack voltages.

During the charge/discharge reactions the following reactions can occur:

$$(3) \qquad V_{state\ +2\to+3} : V^{3+} + e^- \rightleftharpoons V^{2+} \qquad\qquad E^0_{2\to3} = -0.26V$$

$$(4) \qquad V_{state\ +3\to+4} : VO^{2+} + 2H^+ + e^- \rightleftharpoons V^{3+} + H_2O \qquad\qquad E^0_{3\to4} = 0.34V$$

$$(5) \qquad V_{state+4\to+5} : VO_2^+ + 2H^+ + e^- \rightleftharpoons VO^{2+} + H_2O \qquad\qquad E^0_{4\to5} = 1.00V$$

Reaction (3) is primarily related to the anode side, while reaction (5) primarily is related to the cathode side and reaction 4 primarily is related to the initial charging step of the pristine $V_{state}$ = 3.5 solution or in cases, in which the solution is unbalanced.

The open circuited potential ($U_{OCV}$) is governed by the following Nernst equations:

$$(6) \quad E_{2-3} = E_{2-3}^0 - \frac{RT}{nF} \ln \frac{[V^{2+}]}{[V^{3+}]}$$

$$(7) \quad E_{3-4} = E_{3-4}^0 - \frac{RT}{nF} \ln \frac{[V^{3+}]}{[VO^{2+}][H^+]^2}$$

$$(8) \quad E_{4-5} = E_{4-5}^0 - \frac{RT}{nF} \ln \frac{[VO^{2+}]}{[VO_2^+][H^+]^2}$$

Equations 6, 7 and 8 are related to reactions 3, 4 and 5 above, respectively. If a current I is applied to the stack, the voltage measured ($U_{CD}$) will be:

$$(9) \quad U_{CD} = U_{OCV} + IR_{cell,}$$

where $R_{cell}$ is the internal resistance of each cell in the stack. $R_{cell}$ is in general not constant but is a function of the state-of-charge (SoC), temperature, flow-rate and current. When the current is positive the battery is charged. When the current it is negative the battery is discharged.

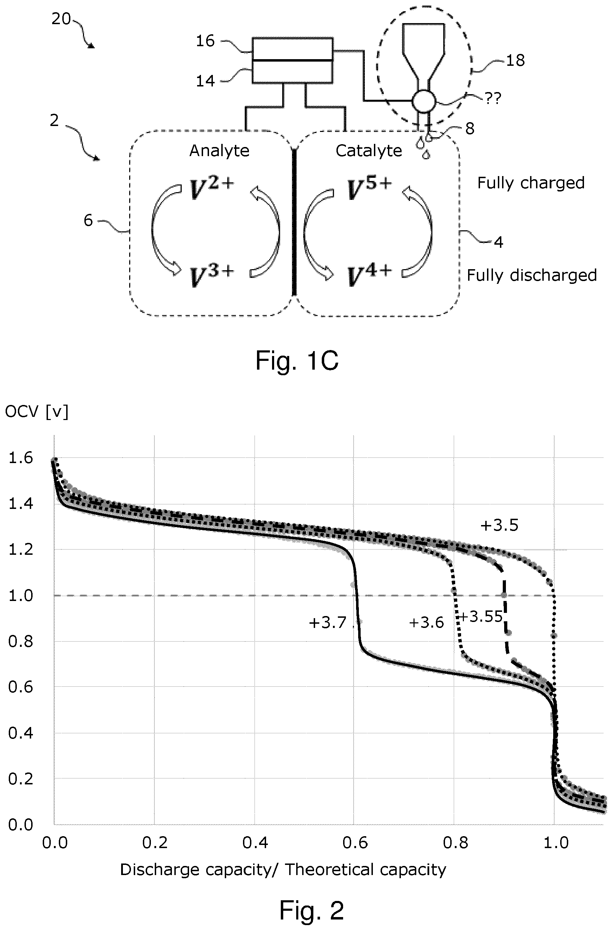

As an example, Fig. 2 shows $U_{OCV}$ vs. the discharge capacity ($CAP_{dis}$) relative to the theoretical capacity $CAP_{Theo}$ for a Ctot = 1.6 M vanadium solution in 2 M $H_2SO_4$ in four different scenarios. One with a fully balanced (unoxidised) vanadium solution ($V_{state}$ = 3.5) and three cases, in which the vanadium solution has been oxidised ($V_{state}$ = 3.55, 3.6 and 3.7). It can be seen that for the $V_{state}$ = 3.5 the curve falls monotonically with $CAP_{dis}/CAP_{Theo}$ until it reaches 1. Here only reaction 3 takes place on the anode side and reaction 5 on the cathode side. However, for the oxidised solutions Uocv falls dramatically when $CAP_{dis}/CAP_{Theo}$ < 1.

In the regime where Uocv > 1, it is same reactions as for the $V_{state}$ = 3.5 that takes places. When $U_{OCV}$ < 1 reaction 4 starts to take place on the capacity limiting anode side. For the oxidised solutions, it is seen that the battery can be discharged out to $CAP_{dis}/CAP_{Theo}$ = 1. This will, however, be at much lower voltage and much lower energy efficiency and in practice is limited to capacities where Uocv is larger than approximately 0.7 V to 1.1 V because of the lower voltage limit of the inverter.

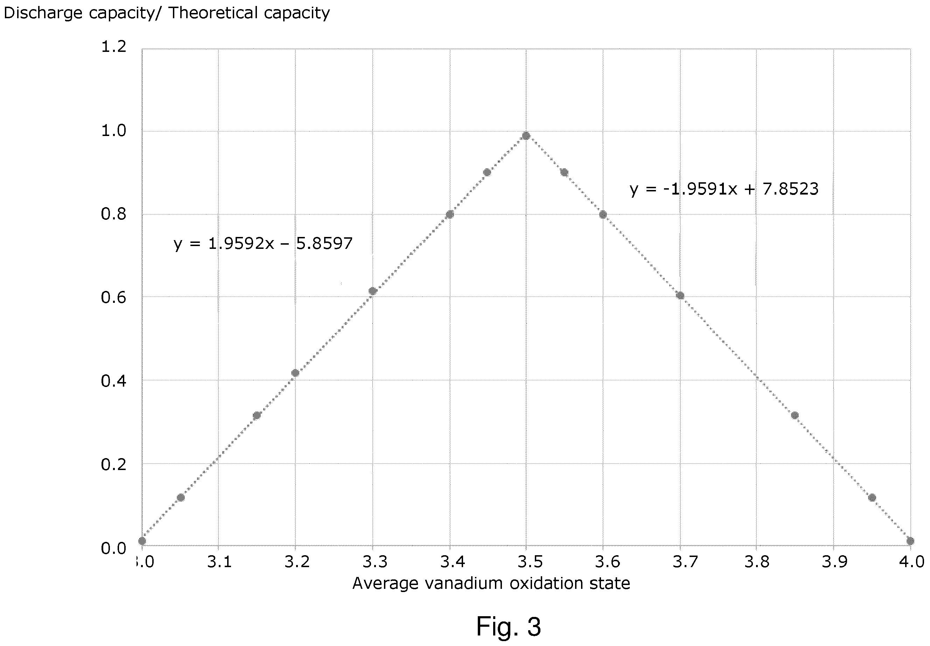

Fig. 3 illustrates the ratio between the discharge capacity ($CAP_{dis)}$ and the theoretical capacity ($CAP_{Theo}$) as a function of the average vanadium oxidation state, $V_{state}$ for $U_{thres}$ = 1 V and $C_{tot}$ = 1.6 M and T = 298 K. Accordingly, the capacity is a function of $V_{state}$. $V_{state}$ indicates the average oxidation state of vanadium in the electrolyte solution. As illustrated in Fig. 3, the $V_{state}$ can be divided into two:

- A reduced region, in which the $V_{state}$ is in the range 3.0-3.5 and
- An oxidised region, in which the $V_{state}$ is in the range 3.5-4.0.

It can be seen that the capacity falls almost linearly when $V_{state}$ deviates from the balanced state ($V_{state}$ = 3.5) and that the curve is almost symmetrical and independent on whether the solution is oxidised or reduced. If fully oxidised ($V_{state}$ = 4.0) or reduced ($V_{state}$ = 3.0) the accessible capacity becomes zero.

Thus, to enable full utilisation of the capacity the concentrations of [$V^{2+}$] and [$V^{3+}$] on the anode side must always be equal to the concentrations of [$V^{5+}$] and [$V^{4+}$] on the cathode side, respectively (i.e. [$V^{2+}$] = [$V^{5+}$] and [$V^{3+}$] = [$V^{4+}$]), during all times of the battery operation.

Currently, electrolysis is used for rebalancing oxidised electrolyte. Here a smaller electrolysis cell is connected with the cathode tank. Electrolyte is pumped into the cell where either $V^{4+}$ or $V^{5+}$ is reduced to $V^{3+}$ or $V^{4+}$, respectively, while oxygen is produced on the other side. This method is very costly and inefficient.

Furthermore, addition of chemical reductants has also been reported in WO 2015047079 A1, US2015017556 and US2016056487. Here one of the main challenges is that the reducing chemicals cannot leave any potentially damaging residues in the solutions. E.g. known reductants like borohydrides can therefore not be used as they will leave a Boron residue. Nonetheless, use of organic reductants have also been described as they in principle during the reduction reaction will only react into $H_2O$ and $CO_2$, and since $CO_2$ escapes the solution as bubbles, use of organic reductants leaves the solutions without residues. For this reason, organic reductants are an attractive chemical for rebalancing of vanadium electrolyte.

Nonetheless, to determine the amount of reductant that needs to be added for rebalancing to $V_{state}$ = 3.5 requires a technician to go to the battery installation site and take out samples of the anolyte and catholyte, and take it to a laboratory where the $V_{state}$ can be determined (typically with redox titration). From the measured $V_{state}$ the amount of the reducing chemical needed is calculated and then brought to the installation site and added to the catholyte. Obviously, this procedure is costly as it requires at least two visits by a technician to the installation site and also costly laboratory time for measuring the $V_{state}$.

Thus, there is a need for a method and a system that reduces or even eliminates the above-mentioned disadvantages of the prior art.

It is an object of the invention to provide a system and a method for balancing an imbalanced vanadium redox flow battery, in which automated determination of the amount of reductant is detected from data during operation and in which automated addition of reductant is based on these data.

It is an object of the invention to provide a system and a method for maintaining the capacity of the VRFB constant at an overall oxidation state of 3.5, despite the anolyte being continuously oxidised, by addition of a residue-free organic reducing agent during operation without any downtime.

## Summary of the invention

The object of the present invention can be achieved by a method as defined in claim 1 and by a system as defined in claim 7. Preferred embodiments are defined in the dependent subclaims, explained in the following description and illustrated in the accompanying drawings.

The method according to the invention is a method for balancing an imbalanced vanadium redox flow battery during operation by adding a preferably organic reductant, wherein the vanadium redox flow battery comprises a cathode tank with a cathode electrolyte and an anode tank with an anode electrolyte, wherein the same redox active vanadium solution is present in the cathode tank and the anode tank of the vanadium redox flow battery, wherein the method comprises the following steps:

- monitoring the state of charge (SoC) of the electrolyte in the vanadium redox flow battery during either:

 a) a first configuration, in which the vanadium redox flow battery is charged and performing a discharge of the vanadium redox flow battery or
 b) a first configuration, in which the vanadium redox flow battery is discharged and performing a charge of the vanadium redox flow battery;

- _monitoring the discharge profile and/or charge profile of the vanadium redox flow battery;
- determining the faradaic imbalance of the electrolyte and calculating a first quantity of the organic reductant to be added to the electrolyte to balance the vanadium redox flow battery during operation and
- adding a second quantity of the organic reductant to the electrolyte.

Hereby, it is possible to provide a method that in a very accurate manner determines the SoC of the battery by continuously measuring the open circuited potential using an OCV-cell. The OCV measurement is used to monitor the OCV of a full charge/discharge, despite of changes done during discharge and vice versa during charge. This feature eases the determination of a cycle start and end despite temperature fluctuations and different charge/discharge currents.

The OCV measurements are used to determine the faradaic imbalance of the electrolyte whereafter a first quantity of a residue-free organic reducing agent used for rebalancing the electrolyte is calculated, and a second quantity of the residue-free organic reducing agent is added by an automatic dosing unit. Hence, the capacity is constantly maintained high, despite the VRFB being continuously oxidised.

In one embodiment, the discharge profile of the vanadium redox flow battery includes a plurality of corresponding values of the open circuit voltage and the discharge capacity of the vanadium redox flow battery.

In one embodiment, the charge profile of the vanadium redox flow battery includes a plurality of corresponding values of the open circuit voltage and the charge capacity of the vanadium redox flow battery.

In one embodiment, the method comprises the step of providing the open circuit voltage as a function of the discharge capacity of the vanadium redox flow battery of a system according to the invention.

The method comprises the step of determining the SoC of the electrolyte in the vanadium redox flow battery.

Moreover, the method comprises the step of determining the faradaic imbalance of the electrolyte. As faradaic imbalance is found to significantly affect discharge capacity, maximum power density, cell resistances, and efficiency values are essential to be able to detect the faradaic imbalance.

The method comprises the step of calculating a first quantity of the organic reductant to be added to the electrolyte to balance the vanadium redox flow battery during operation.

In one embodiment, the calculation may be carried out by using the following equation:

$$(10) \qquad m = M\Delta C/(zF)$$

Where m is the mass of the reductant, M is the molar mass of the reductant, $\Delta C$ the missing capacity of battery and z is the number of electrons involved in the vanadium reduction reaction.

In one embodiment, the first calculated quantity of organic reductant is calculated by using equation 12 (defined in the detailed description of the invention).

Vanadium and the reductant oxalic acid react 2:1 (z = 2) shown in the chemical reaction below:

$$(11) \qquad 2VO_2^+ + H_2C_2O_4 \rightarrow 2VO^{2+} + 2CO_2 + H_2O \quad E_0 = +1.49V$$

Hence, the amount of added oxalic acid is easily determined based on the molar mass (equation 10).

The method comprises the step of adding a second quantity of the organic reductant to the electrolyte. It is important to underline that the second quantity of the organic reductant may differ from the first quantity of the organic reductant to be added to the electrolyte to balance the vanadium redox flow battery during operation.

In one embodiment, the second quantity of the organic reductant is selected to be smaller than the first quantity of the organic reductant. Hereby, it is possible to avoid that the quantity of the organic reductant to be added to the electrolyte to balance the vanadium redox flow battery during operation is larger than needed. This is important since a decrease in the capacity may be caused by other things than oxidation leading to electrolyte imbalance in the vanadium redox flow battery.

In one embodiment, the step of monitoring the discharge profile of the vanadium redox flow battery is accomplished by measuring the OCV of the electrolytes in the vanadium redox flow. Hereby, it is possible to determine the SoC of the battery in a very accurate manner. This feature eases the determination of a start and an end of a cycle despite of temperature fluctuations and different charge/discharge currents.

In one embodiment, the step of monitoring the discharge profile of the vanadium redox flow battery is accomplished by providing a battery that is charged to a first predefined degree and detecting the SoC of the fully charged battery by use of an OCV measurement.

In one embodiment, the first predefined degree is in the range 60-100% of fully charged.

In one embodiment, the first predefined degree is in the range 70-95% of fully charged.

In one embodiment, the first predefined degree is in the range 75-90% of fully charged.

In one embodiment, the step of monitoring the discharge profile of the vanadium redox flow battery is accomplished by providing a fully charged battery.

In one embodiment, the step of monitoring the discharge profile of the vanadium redox flow battery is accomplished by providing an at least partially discharged battery and detecting the SoC of the fully discharged battery by use of an OCV measurement.

In one embodiment, the step of monitoring the discharge profile of the vanadium redox flow battery is accomplished by providing a fully discharged battery.

In one embodiment, the first predefined degree is in the range 60-100% of fully discharged (0-40% SoC).

In one embodiment, the first predefined degree is in the range 70-95% of fully discharged (3-30% SoC).

In one embodiment, the first predefined degree is in the range 75-90% of fully discharged (5-15% SoC).

In one embodiment, the organic reductant comprises oxalic acid.

In one embodiment, the organic reductant is oxalic acid.

It may be an advantage that the step of adding the quantity of the organic reductant to the electrolyte is carried out by using an automated procedure of adding reductant. Hereby, the need for a skilled service staff manually adding the organic reductant is eliminated. Hereby, time and cost can be saved.

The automated procedure of adding reductant may include activating a dosing pump and instructing the dosing pump to dose a predefined quantity of reductant to the electrolyte.

It is possible to dose the entire quantity at once.

In one embodiment, however, the predefined quantity of reductant may be added in two or more separated portions.

In one embodiment, the automated procedure of adding reductant is carried out in a manner in which the first calculated quantity of organic reductant is larger than the second quantity of organic reductant being added to the electrolyte, wherein the ratio between the first calculated quantity and the second quantity of organic reductant being

added, $\alpha$ (see equation 12), has a predefined value preferably in the range between 0.6 and 0.95.

In one embodiment, the second quantity of organic reductant being added has a predefined value preferably in the range between 0.7 and 0.95.

In one embodiment, the second quantity of organic reductant being added has a predefined value preferably in the range between 0.75 and 0.95.

In one embodiment, the second quantity of organic reductant being added has a predefined value preferably in the range between 0.8 and 0.95.

In one embodiment, the first calculated quantity of organic reductant is calculated by using the equation:

$$(10) \qquad m = M\Delta C/(zF)$$

where m is the mass of the reductant, M is the molar mass of the reductant, $\Delta C$ the missing capacity of battery and z is the number of electrons involved in the vanadium reduction reaction.

In one embodiment, the first calculated quantity of organic reductant is calculated by using equation 12 (defined in the detailed description of the invention).

In one embodiment, the method comprises the step of determining a time period, in which time period no reductant is added to the electrolyte, wherein the time period is selected in dependency of the second quantity.

In one embodiment, the time period is selected to be proportional to the second quantity.

The system according to the invention is a system for balancing an imbalanced vanadium redox flow battery during operation by adding an organic reductant, wherein the vanadium redox flow battery comprises a cathode tank with a cathode electrolyte and an anode tank with an anode electrolyte, wherein the same redox active vanadium solution is present in the cathode tank and the anode tank of the vanadium redox flow battery, wherein the system comprises:

- a monitoring unit configured to monitor a discharge profile and/or charge profile of the vanadium redox flow battery;
- a control unit configured to:

     a) determine the state of charge (SOC) of the electrolyte in the vanadium redox flow battery during either:

          a) a first configuration, in which the vanadium redox flow battery is charged and performing a discharge of the vanadium redox flow battery or
          b) a first configuration, in which the vanadium redox flow battery is discharged and performing a charge of the vanadium redox flow battery and
          c) determine the faradaic imbalance of the electrolyte and
          d) calculate a first quantity of the organic reductant to be added to the electrolyte to balance the vanadium redox flow battery during operation and

- a dosing unit configured to add a second quantity of the organic reductant to the electrolyte.

Hereby, it is possible to provide a system that maintains the average oxidation state of the electrolyte at 3.5 $\pm$ 0.01 at all times despite being continuously oxidised by oxygen from the air.

In one embodiment the monitoring unit comprises an OCV cell configured to monitor the discharge profile of the vanadium redox flow battery by measuring an OCV and determining the SoC of the electrolyte in the vanadium redox flow battery.

In one embodiment, the organic reductant is oxalic acid.

It may be an advantage that the dosing unit is configured to automatically adding the second quantity of the organic reductant to the electrolyte. The second quantity of the organic reductant may differ from the first quantity of the organic reductant to be added to the electrolyte to balance the vanadium redox flow battery during operation.

In one embodiment, the second quantity of the organic reductant is selected to be smaller than the first quantity of the organic reductant in order to avoid that the quantity of the organic reductant to be added to the electrolyte to balance the vanadium redox flow battery during operation is larger than needed.

In one embodiment, the automatic dosing unit is configured to be controlled on the basis of the imbalance calculations. Whenever the overall oxidation state is within the range 3.49 to 3.51 the dosing unit will be activated, and a second quantity will be added.

In one embodiment, the control unit is configured to calculate a time period, in which time period no reductant is added to the electrolyte, wherein the time period is selected in dependency of the second quantity.

It may be advantageous that the dosing unit is configured to automatically add reductant in a manner in which the first calculated quantity of organic reductant is larger than the second quantity of organic reductant being added to the electrolyte, wherein the ratio between the first calculated quantity and the second quantity of organic reductant being added has a predefined value preferably in the range between 0.6 and 0.95.

It may be an advantage that the control unit is configured to calculate the first quantity of organic reductant by using the previously mentioned equation 10.

It may be beneficial that the control unit is configured to calculate a time period, in which time period no reductant is added to the electrolyte.

## Description of the Drawings

The invention will become more fully understood from the detailed description given herein below. The accompanying drawings are given by way of illustration only, and thus, they are not limitative of the present invention. In the accompanying drawings:

Fig. 1A    shows a schematic view of the tanks of a vanadium redox flow battery;
Fig. 1B    shows a schematic view of the tanks of the vanadium redox flow battery shown in Fig. 1A, in a configuration in which the capacity and efficiency has decreased due to an electrolyte imbalance introduced through oxidation;
Fig. 1C    shows a schematic illustration of a system for balancing an imbalanced vanadium redox flow battery according to the invention;
Fig. 2    shows the open circuited potential versus the discharge capacity relative to the theoretical capacity for a Ctot = 1.6 M vanadium solution in 2 M $H_2SO_4$ in different scenarios;
Fig. 3    shows the ratio between the discharge capacity and the theoretical capacity as function of the average vanadium oxidation state;
Fig. 4A    shows the reduction efficiency versus time for a plurality of batch tests of oxalic acid;
Fig. 4B    shows the reduction efficiency versus SoC at various times;
Fig. 5A    shows how the required quantity of oxalic acid to be added can be calculated;
Fig. 5B    shows the effect of oxalic acid being added to the electrolyte;
Fig. 5C    shows the effect of oxalic acid being added to the electrolyte;
Fig. 6    shows an example of how the current is during a charge and discharge of the battery as a function of time;
Fig. 7    shows a charge sequence and a discharge sequence, wherein at t=0 the battery is fully discharged, whereafter the battery is charged with varying current;
Fig. 8    shows the discharge capacity as function of time;
Fig. 9    shows how the change in $CAP_{D,n}$ after addition of a reductant;
Fig. 10    shows a system according to the invention and
Fig. 11    shows a flowchart indicating the steps of a method according to the invention.

## Detailed description of the invention

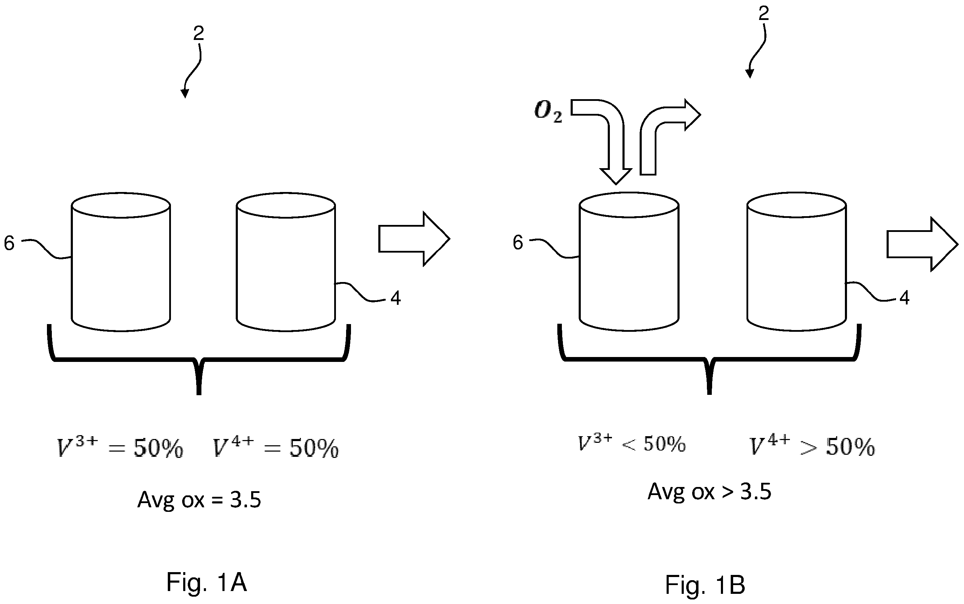

Referring now in detail to the drawings for the purpose of illustrating preferred embodiments of the present invention, a schematic view of the components of a vanadium redox flow battery (VRFB) 2 is illustrated in Fig. 1A.

Fig. 1A illustrates a schematic view of a vanadium redox flow battery 2 comprising an anolyte that is present in an anode tank 6 and a catholyte that is present in a cathode tank. The vanadium redox flow battery 2 is ideally run without any external oxidation. Hence, the average oxidation state of the electrolyte is maintained at 3.5. This occurs when both the concentration of $V^{3+}$ and $V^{4+}$ equal 50%.

Fig. 1B illustrates a schematic view of the vanadium redox flow battery 2 in a configuration, in which overall oxidation state is increased. Oxygen diffuses into the anolyte tank and oxidizes $V^{2+}/V^{3+}$ to $V^{3+}/V^{+4}$.

Hence, an imbalance in the electrolyte is created, as the overall oxidation state is increased >3.5, and the capacity of the vanadium redox flow battery is decreased.

Fig. 1C illustrates a schematic illustration of some of the essential components of a system 20 for balancing an imbalanced vanadium redox flow battery 2 according to the invention. The system 20 comprises a cathode tank 4 with a cathode electrolyte and an anode tank 6 with an anode electrolyte. The same redox active vanadium solution is present in the cathode tank 4 and the anode tank 6.

The system 20 further comprises a dosing unit 18 arranged and configured to add an organic reductant 8 to at least one of the electrolytes. The system 20 comprises a monitoring unit 14 configured for monitoring a discharge profile of the vanadium redox flow battery 2. The monitoring unit 14 is in fluid communication with the cathode tank 4 and with the anode tank 6.

The system 20 comprises a control unit 16 that is configured to determine the SoC of the electrolyte in the vanadium redox flow battery 2.

The control unit 16 is configured to determine the faradaic imbalance of the electrolyte and calculating a first quantity of the organic reductant 8 to be added to the electrolyte to balance the vanadium redox flow battery 2 during operation. The dosing unit 18 is arranged and configured to a quantity of the organic reductant 8 to the electrolyte on the basis of the data provided by the control unit 16. The dosing unit 18 is arranged and configured to dose an organic reductant such as oxalic acid in the cathode tank 4. The control unit 16 is configured to monitoring and controlling the operation of the vanadium redox flow battery 2.

Fig. 2 illustrates the open circuited potential ($U_{OCV}$) versus the discharge capacity ($CAP_{dis}$) relative to the theoretic discharge, $CAP_{Theo}$ for a Ctot = 1.6 M vanadium solution in 2 M $H_2SO_4$ in four different scenarios. One with a fully balanced (unoxidised) vanadium solution ($V_{state}$ = 3.5) and three cases where the vanadium solution has been oxidised ($V_{state}$ = 3.55, 3.6 and 3.7). It is seen that for the $V_{state}$ = 3.5 the curve falls monotonically with $CAP_{dis}/CAP_{Theo}$ until it reaches 1. Here only reaction 3 takes place on the anode side and reaction 5 on the cathode side. However, for the oxidised solutions, the $U_{OCV}$ falls dramatically when $CAP_{dis}/CAP_{Theo}$ < 1.

In the regime where $U_{OCV}$ > 1, the reactions are the same as for the $V_{state}$ = 3.5 that takes places. When $U_{OCV}$ < 1 reaction 4 starts to take place on the capacity limiting anode side. For the oxidised solutions, it is seen that the battery can be discharged out to $CAP_{dis}/CAP_{Theo}$ = 1. This will, however, be at much lower voltage and much lower energy efficiency and in practice is limited to capacities where $U_{OCV}$ is larger than approximately 0.7 V to 1.1 V because of the lower voltage limit of the inverter.

Fig. 3 illustrates the ratio between the discharge capacity ($CAP_{dis}$) and the theoretical capacity ($CAP_{Theo}$) as function of the average vanadium oxidation state, $V_{state}$ for $U_{thres}$ = 1 V and $C_{tot}$ = 1.6 M and T = 298 K.

Accordingly, the capacity is a function of $V_{state}$. $V_{state}$ indicates the average oxidation state of vanadium in the electrolyte solution. As illustrated in Fig. 3, the $V_{state}$ can be divided into two:

- A reduced region, in which the $V_{state}$ is in the range 3.0-3.5 and
- An oxidised region, in which the $V_{state}$ is in the range 3.5-4.0.

It can be seen that the capacity decreases almost linearly when $V_{state}$ deviates from the balanced state ($V_{state}$ = 3.5) and that the curve is almost symmetrical and independent on whether the solution gets oxidised or reduced. If fully oxidised ($V_{state}$ = 4.0) or reduced ($V_{state}$ = 3.0) the accessible capacity becomes zero.

Thus, to enable full utilisation of the capacity the concentrations of [$V^{2+}$] and [$V^{3+}$] on the anode side must always be equal to the concentrations of [$V^{5+}$] and [$V^{4+}$] on the cathode side, respectively (i.e. [$V^{2+}$] = [$V^{5+}$] and [$V^{3+}$] = [$V^{4+}$]), during all times of the battery operation.

Among the organic reductants in particular oxalic acid appears to have promising reducing properties.

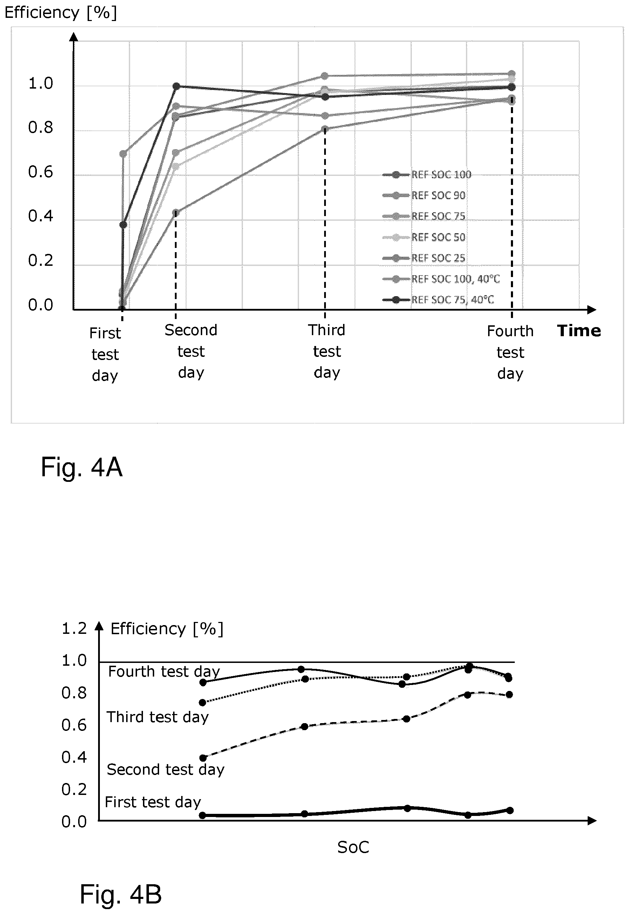

Fig. 4A illustrates the efficiency versus time for a plurality of batch tests of oxalic acid. It can be seen that the beneficial effect of adding oxalic acid cannot be detected right away. The effect can be detected by monitoring the conversion efficiency. Fig 4A shows that the efficiency gradually increases until it peaks at the end of a reaction time period. This reaction time period has experimentally been found to be approximately 1-2 weeks depending on temperature and SoC.

Fig. 4B illustrates the efficiency versus SoC at various times. It can be seen that oxalic acid can reduce both $V^{5+}$ and $V^{4+}$ with 100% efficiency whereby there are no demanding residues in the electrolyte. Additionally, the reaction rates depend on both whether it is $V^{5+}$ or $V^{4+}$ that is being reduced and on temperature. The reaction time may be up to 4 weeks.

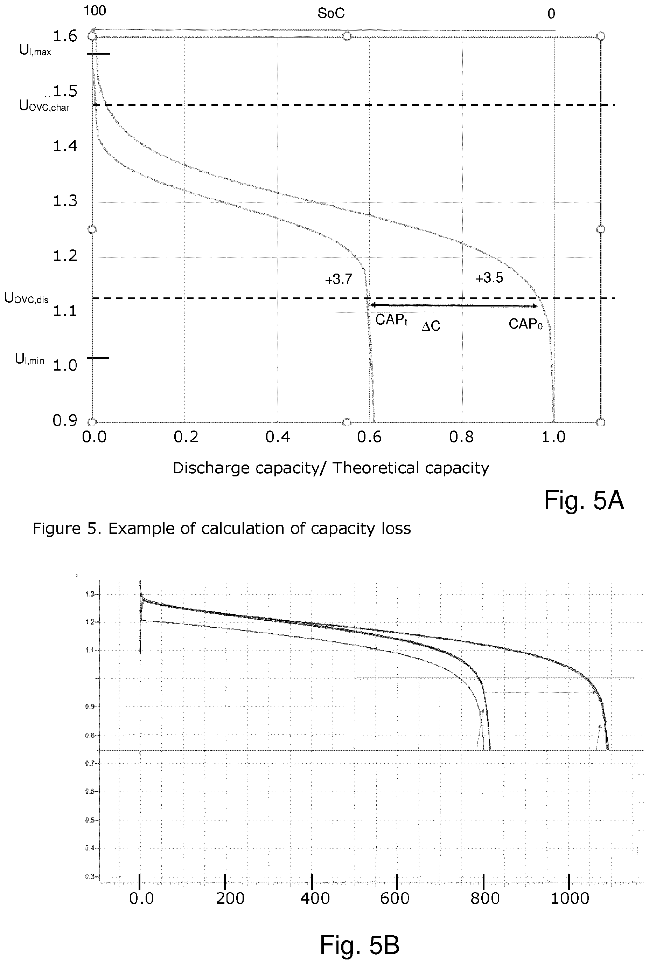

Fig. 5A illustrates how the required quantity of oxalic acid to be added can be calculated from the discharge profiles. Fig. 5A shows the OCV measured in the OCV cell during discharge in two cases. The inverter limits the minimum ($U_{I, min}$) and maximum ($U_{I, max}$) discharge voltages, being absolute limits OCV limits that can be reached. Still in many cases there is only used from 10% to 90% of the theoretical capacity. This is limited by OCV voltage that defines the fully charged state ($U_{OCV, char}$) and fully discharged state ($U_{OCV, dis}$). The first discharge cycle is done at a time where it is known that the electrolyte is balanced ($V_{state}$ = 3.5), and the value of $CAP_0$ is registered. At a later time, the electrolyte has been oxidised and the discharge capacity has now changed to $CAP_t$. The difference $\Delta C = CAP_0 - CAP_t$ can be used to calculate the needed reductant by the following equation:

$$(12) \qquad m = \alpha M \Delta C/(zF)$$

where m is the mass of the reductant, M is the molar mass of the reductant, $\Delta C$ the capacity change in Coulomb, F is the Faraday constant and z is the number of electrons involved in the vanadium reduction reaction (reaction 11). $\alpha$ is a dimensionless number that corrects the fact that $\Delta C$ is smaller than the theoretical capacity loss because of $U_{OCV, dis}$. Theoretically, $\alpha$ > 1 and increases with increasing $U_{OCV, dis}$.

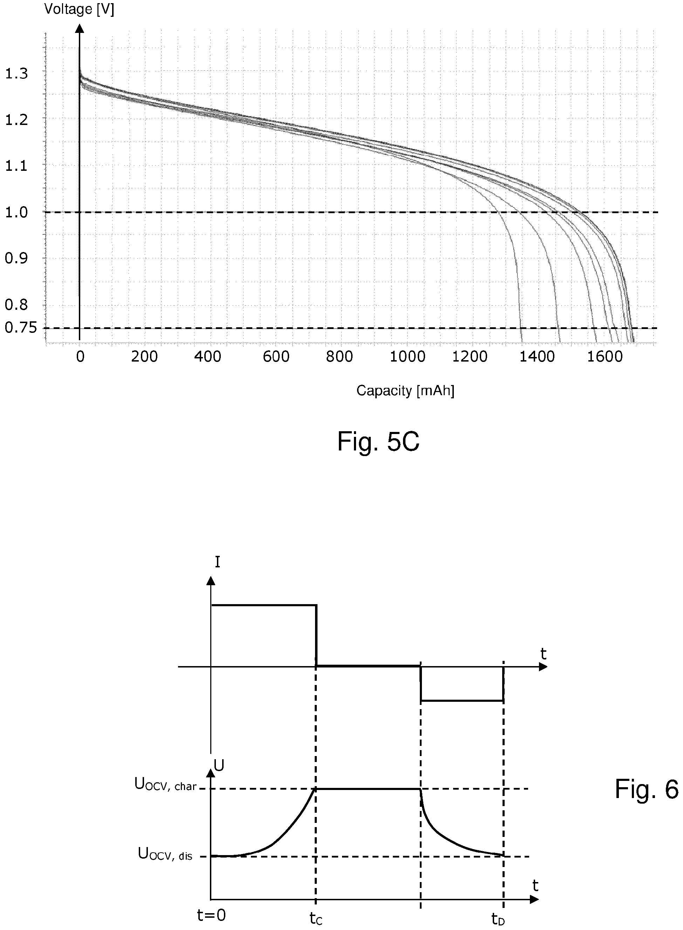

Fig. 5B and Fig. 5C show examples of the effect of adding a reductant. In Fig. 5B 0.63g of oxalic acid is added at cycle 76. By cycle 78 it is fully reacted. The table below shows that the capacity increase is 250 mAh if Uocv,dis = 1 V is used. If Uocv,dis = 0.75 V is used the capacity increase is 274 mAh. This corresponds to values of $\alpha$ 93.3% and 102.2%, respectively.

In Fig. 5C 0.8472 g of oxalic acid is added at cycle 110. By cycle 118 it is fully reacted. The table below shows that the capacity increase is 314 mAh if Uocv,dis = 1 V is used. If Uocv,dis = 0.75 V is used the capacity increase is 341 mAh. This corresponds to values of $\alpha$ 86.6% and 94.7%, respectively.

Theoretically, $\alpha > 1$ for a fully stoichiometric rebalancing and decreases with increasing $U_{OCV, dis}$ and as the $V_{state}$ approaches +3.5.

Nonetheless, if too much reductant is added the $V_{state}$ becomes larger than 3.5 and the capacity will decrease as well and for this reason it is preferred to have a value of $\alpha < 1$. For heavily oxidised/imbalanced vanadium solutions a preferred value of $\alpha$ is in the range 0.7-1.0, while for less oxidised/imbalanced vanadium solutions a preferred value of $\alpha$ is in the range 0.85-1.0.

| Cycle | Mass of reductant oxalic acid (g) | Uocv, dis (V) | Initial discharge cap (mAh) | Discharge cap after reductant (mAh) | Capacity increase (mAh) | Theoretical capacity increase | [%] 1/$\alpha$ |
|---|---|---|---|---|---|---|---|
| 76 | 0.63 | 1 | 792 | 1042 | 250 | 267.9 | 93.3 |
| 76 | 0.63 | 0.75 | 819 | 1093 | 274 | 267.9 | 102.2 |
| 110 | 0.8472 | 1 | 1274 | 1526 | 312 | 360.2 | 86.6 |
| 110 | 0.8472 | 0.75 | 1344 | 1685 | 341 | 360.2 | 94.7 |

Fig. 6 illustrates an upper graph depicting the current I during a charge and discharge of the battery as function of time t. Fig. 6 illustrates a lower graph depicting the open circuit voltage (OCV) as a function of time t. Fig. 6 shows an example of how the current I is during a charge and discharge of the battery as function of time t. During the charging the current (I) is positive and charges the battery until the OCV reaches $U_{OCV,char}$, at time $t_C$ where the battery is fully charged. This is followed by a pause whereafter the battery is discharged with a negative current (I) until the OCV reaches $U_{OCV,dis}$ at time to where the battery is fully discharged. The discharge capacity can be calculated from the following equation:

$$(13) \qquad CAP_D = -\int_{t_C}^{t_D} I \, dt$$

Still, in most applications the charge and discharge does not follow simple charge and discharge with constant current. In most cases it varies and can even discharge during a charging cycle.

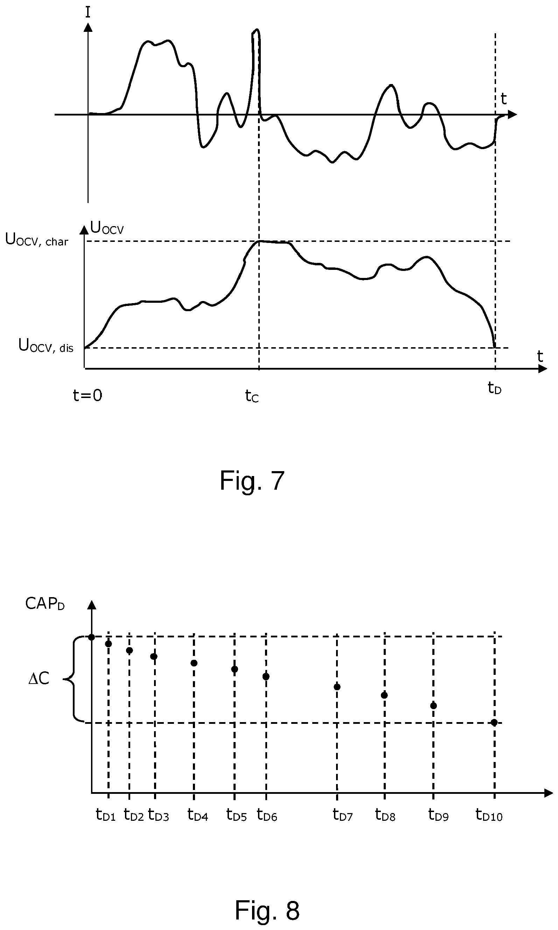

Fig. 7 illustrates a charge sequence and a discharge sequence, wherein at t=0 the battery is fully discharged, where after the battery is charged with varying current I. At t=0 the battery is fully discharged. Hereafter the battery is charged with varying current that even becomes negative (discharge) for short time periods. At time tc the battery is fully charged. This is followed by a period where the battery is discharged, but also with short intervals where the current is positive (charging). This takes place until the battery is fully discharged at time $t_D$. In this case the discharge capacity of the battery is also given by equation (13). However, in some cases the discharge time can be quite significant, whereby the self-discharge of the battery has to be taken into account. In this case $CAP_D$ is calculated from the following equation:

$$(14) \qquad CAP_D = -\int_{t_c}^{t_D} (I + I_{SD}) dt$$

Where $I_{SD}$ is the self-discharge current of the battery (shunt currents and membrane crossover). $I_{SD}$ is dependent of temperature, flow rate, SoC and current, however, for a full discharge cycle of relatively short duration it can be considered to be constant.

With measurement of the OCV and current during charging/discharging equations 13 or 14 are used for calculating the initial capacity when the electrolyte is balanced ($V_{state}$ = 3.5) $CAP_{D,0}$. At subsequent discharge cycles/times the discharge capacity is calculated equally ($CAP_{D,n}$), where n refers to the cycle. After any cycle $\Delta C$ is calculated from $CAP_{D,0}$ - $CAP_{D,n}$ and the mass of the reductant is calculated from equation 12.

It is preferred to have $V_{state}$ in the range 3.49-3.51, acknowledging that the experimental resolution for calculating the imbalance from the battery data during use (and the reduction of amount of chemical) may not be sufficient for reaching 3.49-3.51. In one embodiment, the method comprises the step of monitoring the capacity during time. An example of this is shown in Fig 8.

Fig. 8 illustrates the discharge capacity as function of time. Fig. 8 shows the discharge capacity as function of time. The capacity at t = 0 is the one for $V_{state}$ = 3.5, while at subsequent times the electrolyte is oxidised and the capacity decreases. It is possible to determinate $\Delta C$ by use of linear regression.

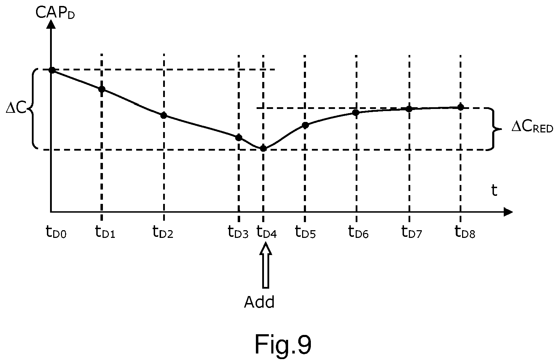

Fig. 9 illustrates the change in $CAP_{D,n}$ after addition of a reductant. In one embodiment, the method comprises the step of monitoring the change in $CAP_{D,n}$ after addition of the reductant. This is shown in figure 9, where $\Delta C$ is found from the slope of $CAP_{D,n}$ vs. time in the range $t_{D0}$ to $t_{D4}$. The reductant is added at $t_{D4}$ and $CAP_{D,n}$ is monitored until a constant value has been obtained. Hereafter $\Delta C_{RED}$, is calculated and compared to $\Delta C\alpha$, in order to monitor if the added reductant has the expected effect. It may be an advantage that the time ($t_{Dn}$) of the last measurement of the $CAP_D$ is at least 14 days as it has been disclosed that the time for all of the reductant in some cases takes up to 2-4 weeks (depending on SoC and temperature) for completing the reaction.

In one embodiment, the method comprises the step of calculating $\Delta C$ and the mass of the reductant by an average of the charge and discharge capacity with reference to Fig. 6 and Fig. 7. This is done by using the following equation:

$$(14) \quad CAP_{CD,n} = \frac{\int\limits_{t_D}^{t_0} I\,dt - \int\limits_{t_c}^{t_D} I\,dt}{2}$$

The mass of the reductant can be calculated by using eq. 12 where $\Delta C = CAP_{CD,0} - CAP_{CD,n}$, where $CAP_{CD,0}$ is the capacity with $V_{state}$ = 3.5

The advantage of this method is that the self-discharge current during charging will cancel out with the self-discharge during discharging if the charge and discharge time are approximately the same.

In one embodiment, the method comprises the step of calculating $\Delta C$ and the mass of the reductant on the basis of the charge capacity. With reference to Fig. 6 and Fig. 7 this can be done by using the following equation:

$$(15) \quad CAP_{C,n} = \int\limits_{t_c}^{t_0} I\,dt$$

The mass of the reductant is again calculated from eq. 12 where $\Delta C = CAP_{C,0} - CAP_{C,n}$, where $CAP_{C,0}$ is the capacity with $V_{state}$ = 3.5.

The advantage of this method is that the self-discharge current during charging will overestimate $CAP_{C,n}$ whereby $\Delta C$ will be underestimated and there is no risk of adding too much of the reduction chemical.

In one embodiment of the invention, the dosing of the reduction chemical is automated. As an example, the organic reductant can be dissolved in water and connected with a dosing pump that accurately doses the calculated amount of reductant.

In one embodiment of the invention, there is remote access to the battery so that a remote monitoring can be carried out hereby enabling calculation of the mass. In one embodiment, dosing of the reductant can be controlled remotely.

Fig. 10 illustrates a system 20 according to the invention. The system 20 comprises a vanadium redox flow battery 2 having a cathode tank 4 with with a cathode electrolyte and an anode tank 6 with an anode electrolyte. The vanadium redox flow battery 2 comprises a stack 36 with an ion exchange membrane 24 separating the negative and positive electrolyte. The ion exchange membrane 24 is in fluid contact with each of the tanks 4, 6. A first pump 22 is arranged to circulate cathode electrolyte from the cathode tank 4 to the ion exchange membrane 24 and further from the ion exchange membrane 24 to the cathode tank 4. Likewise, a second pump 22' is arranged to circulate anode electrolyte from the anode tank 6 to the ion exchange membrane 24 and further from the ion exchange membrane 24 to the anode tank 6.

The same redox active vanadium solution is present in the cathode tank 4 and the anode tank 6. The vanadium redox flow battery 2 is controlled by a programmable logic controller 26. The programmable logic controller 26 is connected to a plurality of sensors that detect various parameters such as temperature, pressure, flow, pump current, redox flow battery current or redox flow battery voltage. The programmable logic controller 26 is configured to control the vanadium redox flow battery 2 on the basis of inputs from the sensors.

The electricity from the vanadium redox flow battery 2 is converted from direct current (DC) to alternating current (AC) in the inverter unit 28 and distributed to the public grid.

The inverter unit 28 is electrically connected to a solar photovoltaic system that comprises an energy meter 34 and a number of solar panels 30 that are electrically connected to a solar inverter 32. The inverter unit 28 and the solar inverter is electrically connected to a local house. Accordingly, electricity produced by the solar photovoltaic system can be used in the house or stored in the vanadium redox flow battery 2.

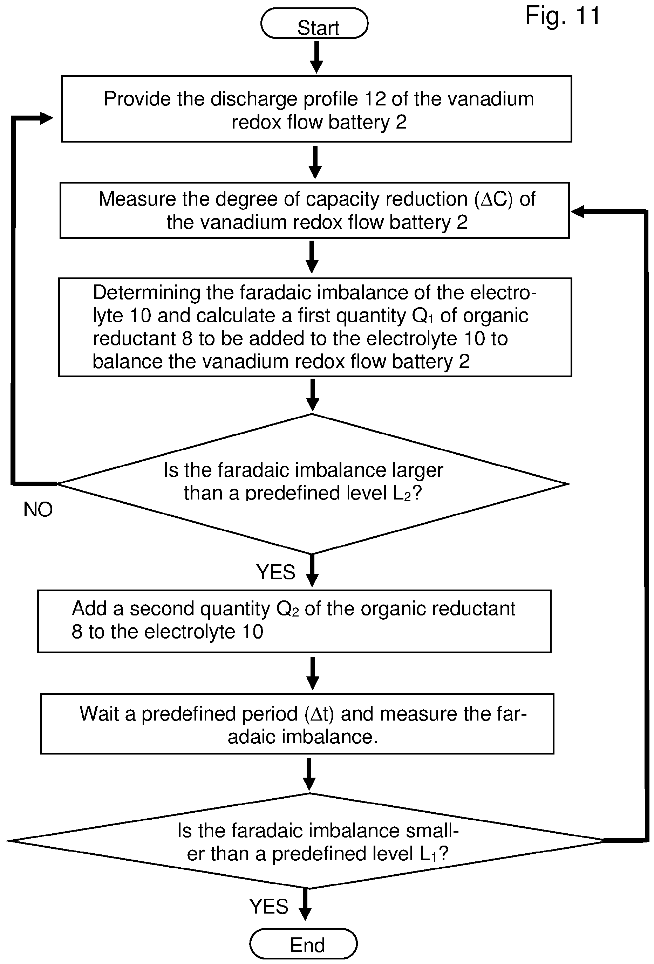

Fig. 11 illustrates a flowchart indicating the steps of a method according to the invention. Initially, a discharge profile 12 of the vanadium redox flow battery 2 is provided. The discharge profile 12 may be detected as explained with reference to the previous figures.

The next step is to measure the degree of capacity reduction ($\Delta C$) of the vanadium redox flow battery 2.

Hereafter, the faradaic imbalance of the electrolyte 10 is determined. This allows calculation of first quantity Q1 of organic reductant 8 to be added to the electrolyte 10 to balance the vanadium redox flow battery 2.

If the faradaic imbalance is larger than a predefined level $L_2$ a second quantity of the organic reductant 8 is added to the electrolyte 10. After a predefined rest period (e.g. one week) the faradaic imbalance is measured again. If the faradaic imbalance is smaller than a predefined level $L_1$ the process is ended. If not, step number two (measurement of the degree of capacity reduction ($\Delta C$) of the vanadium redox flow battery 2) is carried out.

If the faradaic imbalance, however, is not larger than a predefined level $L_2$, the initial step is repeated.

**List of reference numerals**

| | |
|---|---|
| 2 | Vanadium redox flow battery |
| 4 | Cathode tank |
| 6 | Anode tank |
| 8 | Organic reductant |
| 10 | Electrolyte (redox active vanadium solution) |
| 12 | Discharge profile |
| 14 | Monitoring unit |
| 16 | Control unit |
| 18 | Dosing unit |
| 20 | System |
| 22, 22' | Pump |
| 24 | Ion exchange membrane |
| 26 | Programmable logic controller (PLC) |
| 28 | Inverter unit |
| 30 | Solar panel |
| 32 | Solar inverter |
| 34 | Local house load |
| 36 | Stack |
| $E^{\theta'}$ | Standard cell potential |
| E | Electrical potential |
| R | The gas constant |
| T | Temperature |
| F | Faradays constant, |
| SOC | State of charge |
| $Q_1$ | First quantity |
| $Q_2$ | Second quantity |
| OCV | Open circuit voltage |
| $T_{rest}$ | Rest period |
| C | Capacity |
| $\Delta C$ | Capacity reduction |
| $\Delta t$ | Time period |

**Claims**

1.  A method for chemical reduction of an oxidised vanadium redox flow battery (2) during operation by adding an organic reductant (8), wherein the vanadium redox flow battery (2) comprises a cathode tank (4) with a cathode electrolyte and an anode tank (6) with an anode electrolyte, wherein the same redox active vanadium solution (10) is present in the cathode tank (4) and the anode tank (6) of the vanadium redox flow battery (2), **characterised in that** the method comprises the following steps:

    - monitoring the state of charge (SoC) of the electrolyte (10) in the vanadium redox flow battery (2) during either:

        a) a first configuration, in which the vanadium redox flow battery (2) is charged and performing a discharge of the vanadium redox flow battery (2) or
        b) a first configuration, in which the vanadium redox flow battery (2) is discharged and performing a charge of the vanadium redox flow battery (2);

    - monitoring a discharge profile (12) and/or charge profile (12) of the vanadium redox flow battery (2);
    - determining the faradaic imbalance of the electrolyte (10) and calculating a first quantity ($Q_1$) of the organic reductant (8) to be added to the electrolyte (10) to balance the vanadium redox flow battery (2) during operation and
    - adding a second quantity ($Q_2$) of the organic reductant (8) to the electrolyte (10).

2.  A method according to claim 1, **characterised in that** the step of monitoring the discharge profile (12) of the vanadium redox flow battery (2) is accomplished by measuring an open circuit voltage (OCV) and determining the state of charge (SOC) of the electrolyte (10) in the vanadium redox flow battery (2) based on the measured open circuit voltage (OCV).

3.  A method according to claim 2, **characterised in that** the step of monitoring the discharge profile (12) of the vanadium redox flow battery (2) is accomplished by providing a charged battery (2) charged to a first predefined degree and detecting the state of charge (SOC) of the fully charged battery (2) by use of an OCV measurement.

4.  A method according to claim 2 or 3, **characterised in that** the step of monitoring the discharge profile (12) of the vanadium redox flow battery (2) is accomplished by providing an at least partially discharged battery (2) and detecting the state of charge (SOC) of the fully discharged battery (2) by use of an OCV measurement.

5.  A method according to one of the preceding claims, **characterised in that** the step of adding the quantity of the organic reductant (8) to the electrolyte (10) is carried out by using an automated procedure of adding reductant (8).

6.  A method according to one of the preceding claims, **characterised in that** the procedure of adding reductant (8) is carried out in a manner in which the first calculated quantity ($Q_1$) of organic reductant (8) is larger than the second quantity ($Q_2$) of organic reductant (8) being added to the electrolyte (10), wherein the ratio between the first calculated quantity ($Q_1$) and the second quantity ($Q_2$) of organic reductant (8) being added has a predefined value preferably in the range between 0.6 and 0.95, wherein the first calculated quantity ($Q_1$) of organic reductant (8) calculated by using the flowing equation:

$$m = \alpha M \Delta C/(zF),$$

where m is the mass of the reductant, M is the molar mass of the reductant, $\Delta C$ the capacity change in Coulomb, F is the Faraday constant and z is the number of electrons involved in the relevant vanadium reduction reaction and $\alpha$ is a dimensionless number.

7.  A system (20) for balancing an imbalanced vanadium redox flow battery (2) during operation by adding an organic reductant (8), wherein the vanadium redox flow battery (2) comprises a cathode tank (4) with a cathode electrolyte and an anode tank (6) with an anode electrolyte, wherein the same redox active vanadium solution (10) is present in the cathode tank (4) and the anode tank (6) of the vanadium redox flow battery (2), **characterised in that** the system (20) comprises:

    - a monitoring unit (14) configured to monitor a discharge profile (12) and/or charge profile (12) of the vanadium redox flow battery (2);
- a control unit (16) configured to:

a) determine the state of charge (SOC) of the electrolyte (10) in the vanadium redox flow battery (2) during either:

a) a first configuration, in which the vanadium redox flow battery (2) is charged and performing a discharge of the vanadium redox flow battery (2) or
b) a first configuration, in which the vanadium redox flow battery (2) is discharged and performing a charge of the vanadium redox flow battery (2) and
c) determine the faradaic imbalance of the electrolyte (10) and
d) calculate a first quantity ($Q_1$) of the organic reductant (8) to be added to the electrolyte (10) to balance the vanadium redox flow battery (2) during operation and

- a dosing unit (18) configured to add a second quantity ($Q_2$) of the organic reductant (8) to the electrolyte (10).

8. A system (20) according to claim 7, **characterised in that** the monitoring unit (14) comprises an open circuit voltage (OCV) cell configured to monitor the discharge profile (12) of the vanadium redox flow battery (2) by measuring an open circuit voltage (OCV) and determining the state of charge (SOC) of the electrolyte (10) in the vanadium redox flow battery (2) based on the measured open circuit voltage (OCV).

9. A system (20) according to one of the preceding claims 7-8, **characterised in that** the dosing unit (18) is configured to automatically adding the second quantity ($Q_2$) of the organic reductant (8) to the electrolyte (10).

10. A system (20) according to one of the preceding claims 7-9, **characterised in that** the control unit (16) is configured to calculate a time period ($\Delta t$), in which time period ($\Delta t$) no reductant (8) is added to the electrolyte (10), wherein the time period ($\Delta t$) is selected in dependency of the second quantity ($Q_2$).

11. A system (20) according to one of the preceding claims 7-10, **characterised in that** the dosing unit (18) is configured to automatically add reductant (8) in a manner in which the first calculated quantity ($Q_1$) of organic reductant (8) is larger than the second quantity ($Q_2$) of organic reductant (8) being added to the electrolyte (10), wherein the ratio between the first calculated quantity ($Q_1$) and the second quantity ($Q_2$) of organic reductant (8) being added has a predefined value preferably in the range between 0.6 and 0.95.

$$V^{3+} = 50\% \quad V^{4+} = 50\%$$

Avg ox = 3.5

**Fig. 1A**

$$V^{3+} < 50\% \qquad V^{4+} > 50\%$$

Avg ox > 3.5

**Fig. 1B**

EP 4 053 951 A1

Fig. 1C

Fig. 2

EP 4 053 951 A1

Discharge capacity/ Theoretical capacity

$y = 1.9592x - 5.8597$

$y = -1.9591x + 7.8523$

Average vanadium oxidation state

Fig. 3

Fig. 4A

Fig. 4B

Fig. 5A

Figure 5. Example of calculation of capacity loss

Fig. 5B

Fig. 5C

Fig. 6

Fig. 7

Fig. 8

$CAP_D$

$\Delta C$

$\Delta C_{RED}$

$t$

$t_{D0}$  $t_{D1}$  $t_{D2}$  $t_{D3}$  $t_{D4}$  $t_{D5}$  $t_{D6}$  $t_{D7}$  $t_{D8}$

Add

Fig.9

Fig. 10

Fig. 11

```
                    ( Start )
                        │
                        ▼
┌───────────────────────────────────────────┐
│  Provide the discharge profile 12 of the   │
│  vanadium redox flow battery 2             │
└───────────────────────────────────────────┘
                        │
                        ▼
┌───────────────────────────────────────────┐
│  Measure the degree of capacity reduction  │
│  (ΔC) of the vanadium redox flow battery 2 │
└───────────────────────────────────────────┘
                        │
                        ▼
┌───────────────────────────────────────────┐
│  Determining the faradaic imbalance of the │
│  electrolyte 10 and calculate a first      │
│  quantity Q₁ of organic reductant 8 to be  │
│  added to the electrolyte 10 to balance    │
│  the vanadium redox flow battery 2         │
└───────────────────────────────────────────┘
                        │
                        ▼
        ◇ Is the faradaic imbalance larger
          than a predefined level L₂? ◇
     NO                               YES
                        ▼
┌───────────────────────────────────────────┐
│  Add a second quantity Q₂ of the organic   │
│  reductant 8 to the electrolyte 10         │
└───────────────────────────────────────────┘
                        │
                        ▼
┌───────────────────────────────────────────┐
│  Wait a predefined period (Δt) and measure │
│  the faradaic imbalance.                   │
└───────────────────────────────────────────┘
                        │
                        ▼
        ◇ Is the faradaic imbalance smaller
          than a predefined level L₁? ◇
                       YES
                        ▼
                    ( End )
```

Provide the discharge profile 12 of the vanadium redox flow battery 2

Measure the degree of capacity reduction (ΔC) of the vanadium redox flow battery 2

Determining the faradaic imbalance of the electrolyte 10 and calculate a first quantity $Q_1$ of organic reductant 8 to be added to the electrolyte 10 to balance the vanadium redox flow battery 2

Is the faradaic imbalance larger than a predefined level $L_2$?

NO

YES

Add a second quantity $Q_2$ of the organic reductant 8 to the electrolyte 10

Wait a predefined period (Δt) and measure the faradaic imbalance.

Is the faradaic imbalance smaller than a predefined level $L_1$?

YES

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 90/03666 A1 (UNISEARCH LTD [AU]) 5 April 1990 (1990-04-05) * page 29 – page 32; claims 1-78 * * page 0035 – page 0041 * ----- | 1,5,7-11 | INV. H01M8/18 H01M8/20 |
| X | US 2013/316199 A1 (KESHAVARZ MAJID [US] ET AL) 28 November 2013 (2013-11-28) * paragraph [0019] – paragraph [0032] * * paragraph [0035] – paragraph [0041]; claims 1-20 * ----- | 1-10 | |
| X | CN 110 911 722 A (DALIAN BOLONG NEW MAT CO LTD) 24 March 2020 (2020-03-24) * page 3 – page 6 * ----- | 1,7 | |

| | TECHNICAL FIELDS SEARCHED (IPC) |
|---|---|
| | H01M |

The present search report has been drawn up for all claims

| Place of search | Date of completion of the search | Examiner |
|---|---|---|
| Munich | 29 July 2022 | Wiedemann, Eric |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
.........................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 22 15 8464

This annex lists the patent family members relating to the patent documents cited in the above-mentioned European search report.
The members are as contained in the European Patent Office EDP file on
The European Patent Office is in no way liable for these particulars which are merely given for the purpose of information.

29-07-2022

| Patent document cited in search report | | Publication date | Patent family member(s) | | Publication date |
|---|---|---|---|---|---|
| WO 9003666 | A1 | 05-04-1990 | NONE | | |
| US 2013316199 | A1 | 28-11-2013 | AU | 2013266231 A1 | 18-12-2014 |
| | | | BR | 112014029272 A2 | 27-06-2017 |
| | | | CN | 104471772 A | 25-03-2015 |
| | | | EP | 2856549 A1 | 08-04-2015 |
| | | | HK | 1208960 A1 | 18-03-2016 |
| | | | JP | 2015522913 A | 06-08-2015 |
| | | | KR | 20150021074 A | 27-02-2015 |
| | | | US | 2013316199 A1 | 28-11-2013 |
| | | | WO | 2013177414 A1 | 28-11-2013 |
| | | | ZA | 201408989 B | 28-04-2016 |
| CN 110911722 | A | 24-03-2020 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015047079 A1
- US 2015017556 A
- US 2016056487 A